# EUROPEAN PATENT SPECIFICATION

(11) **EP 4 482 743 B1**
(45) Date of publication and mention of the grant of the patent: **20.05.2026**
(21) Application number: 23722027.2
(22) Date of filing: 24.02.2023
(51) Int. Cl.: B64G 1/22, B64G 1/64

(54) **STIFFENER FOR SPACE VEHICLES**
VERSTEIFUNG FÜR RAUMFAHRZEUGE
RAIDISSEUR POUR VÉHICULES SPATIAUX

(30) Priority: 25.02.2022 FR 2201699
(43) Date of publication of application: 01.01.2025
(73) Proprietor: Network Access Associates Limited, London W12 7FQ (GB)
(72) Inventor: PONCET, Dominique, London W12 7FQ (GB); NAGI, Manraj, London W12 7FQ (GB)
(74) Representative: Cabinet Camus Lebkiri
(86) International application number: PCT/IB2023/000101
(87) International publication number: WO 2023/161718

(56) References cited:
- US-A1- 2016 318 635
- US-A1- 2021 139 170
- US-A1- 2021 229 839

## Description

### Field of the Invention

The field of the invention relates to space vehicles and methods for manufacturing such vehicles. More particularly, the field invention relates to space vehicles, such as satellites, having stiffeners providing structural stability to such space vehicles.

### Background of the Invention

Conventionally built satellites utilize sandwich panels having aluminum honeycomb cores to construct load-bearing structures. Such panels take advantage of the high stiffness-to-density ratio of honeycomb structures. However, honeycomb panels, while lightweight, are typically expensive and difficult to manufacture, and may require specially-designed interface structures in order to fix payload elements thereto. US 2016/318635 A1 discloses a stackable satellite.

### Brief Description of the Figures

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.
Figure 1 shows a perspective view of an exemplary space vehicle.
Figure 2 shows a perspective view of an exemplary space vehicle.
Figure 3 shows elements of an exemplary space vehicle.
Figure 4 shows elements of an exemplary space vehicle, including a stiffener.
Figure 5A shows a cross-sectional view of a stiffener of an exemplary space vehicle.
Figure 5B shows a cross-sectional view of a stiffener of an exemplary space vehicle.
Figure 5C shows a cross-sectional view of a stiffener of an exemplary space vehicle.
Figure 5D shows a cross-sectional view of a stiffener of an exemplary space vehicle.
Figure 6A shows a perspective view of an exemplary space vehicle.
Figure 6B shows a top view of the exemplary space vehicle of Figure 6A.
Figure 6C shows an internal section view of the exemplary space vehicle of Figure 6A, showing an internal stiffener thereof.
Figure 7 shows dimensions of an exemplary space vehicle.
Figure 8A shows an arrangement of four of the exemplary space vehicle of Figure 7 in a launch stack.
Figure 8B shows an arrangement of six of the exemplary space vehicle of Figure 7 in a launch stack.
Figure 9 shows an arrangement of four of the exemplary space vehicle of Figure 7.
Figure 10 shows a perspective view of an exemplary non-claimed space vehicle.
Figure 11 shows a perspective view of a launch stack having a plurality of layers each of which includes four of an exemplary space vehicle.

### Summary of the Invention

A space vehicle according to the invention is defined in claim 1.

In some embodiments, the stiffener includes at least one of aluminum, carbon fiber, or a carbon fiber reinforced polymer.

In some embodiments, the stiffener includes an I-shaped cross-section, a C-shaped cross-section, an elliptical cross-section, or a rectangular cross-section.

In some embodiments, the generally circular shape has a diameter that is in a range of from (a) a distance between the first stacking pillar and the second stacking pillar multiplied by the square root of two to (b) three multiplied by the distance between the first stacking pillar and the stacking pillar multiplied by the square root of two. In some embodiments, the generally circular shape has a diameter that is in a range of from (a) 1.5 multiplied by the distance between the first stacking pillar and the second stacking pillar multiplied by the square root of two to (b) 2.5 multiplied by the distance between the first stacking pillar and the stacking pillar multiplied by the square root of two.

In some embodiments, a distance between the first stacking pillar and the second stacking pillar is in a range of from 200 centimeters to 300 centimeters.

In some embodiments, the stiffener is bolted to the space vehicle body.

In some embodiments, the space vehicle also includes an onboard equipment component. In some embodiments, the onboard equipment component is fixed to the stiffener. In some embodiments, the onboard equipment component lacks a casing.

In some embodiments, a system includes a plurality of space vehicles, wherein each of the plurality of space vehicles includes a space vehicle body having an interior, an exterior, a first side and a second side opposite the first side; a first stacking pillar positioned on the exterior of the space vehicle body at the first side of the space vehicle body; a second stacking pillar positioned on the exterior of the space vehicle body at the second side of the space vehicle body; and a stiffener extending through the interior of the space vehicle body from a first end proximate to the first stacking pillar to a second end proximate to the second stacking pillar so as to rigidly connect the first stacking pillar to the second stacking pillar, the stiffener being directly coupled to the first stacking pillar and the second stacking pillar, wherein the plurality of space vehicles are positioned adjacent to one another and joined to one another at respective stacking pillars thereof so as to form a layer of a launch stack, and wherein the stiffeners of the plurality of the space vehicle combine to form a generally circular shape.

In some embodiments, the plurality of space vehicles includes four space vehicles.

In some embodiments, the plurality of space vehicles includes six space vehicles.

### Detailed Description of the Invention

Throughout the specification, the following terms take the meanings explicitly associated herein, unless the context clearly dictates otherwise. The phrases "in one embodiment" and "in some embodiments" as used herein do not necessarily refer to the same embodiment(s), though they may. Furthermore, the phrases "in another embodiment" and "in some other embodiments" as used herein do not necessarily refer to a different embodiment, although they may.

In addition, the term "based on" is not exclusive and allows for being based on additional factors not described, unless the context clearly dictates otherwise. In addition, throughout the specification, the meaning of "a," "an," and "the" include plural references. The meaning of "in" includes "in" and "on."

As used herein, the terms "and" and "or" may be used interchangeably to refer to a set of items in both the conjunctive and disjunctive in order to encompass the full description of combinations and alternatives of the items. By way of example, a set of items may be listed with the disjunctive "or," or with the conjunction "and." In either case, the set is to be interpreted as meaning each of the items singularly as alternatives, as well as any combination of the listed items.

Disjunctive language such as the phrase "at least one of X, Y, or Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

The exemplary embodiments described herein relate to space vehicles, such as satellites, having internal stiffening elements. Examples described herein also relate to methods for manufacture of such space vehicles.

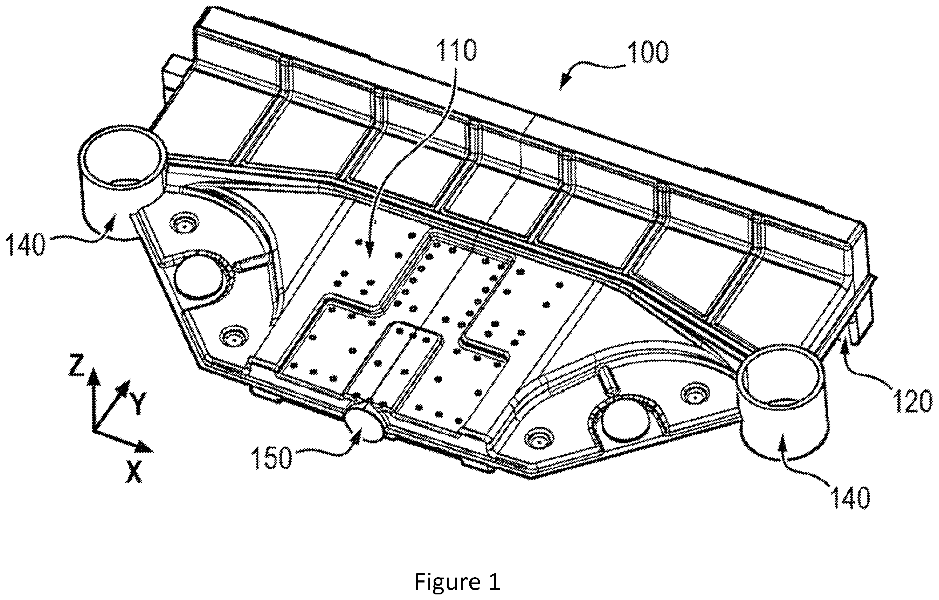

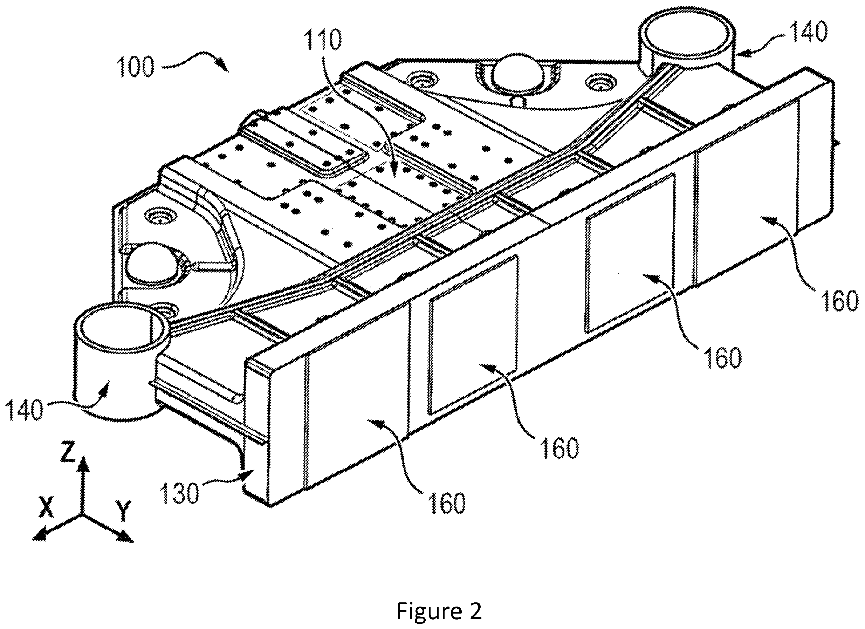

Figures 1 and 2 show perspective views of opposite sides of an exemplary space vehicle 100. In some embodiments, an exemplary space vehicle 100 includes two panels 110, 120 forming an outer shell of the space vehicle 100 and thereby defining a body of the space vehicle 100. In some embodiments, the panels 110, 120 include an aluminum alloy. In some embodiments, the aluminum alloy includes aluminum and zinc. In some embodiments, the aluminum alloy is a 7000-series aluminum alloy. In some embodiments, the aluminum alloy is a 6000-series aluminum alloy. In some embodiments, the aluminum alloy is any aluminum alloy that can be formed by stamping or press-forming. In some embodiments, the aluminum alloy is 7075 aluminum. In some embodiments, the panels 110, 120 are press-formed. In some embodiments, the panels 110, 120 are press-formed from sheet aluminum. In some embodiments, the sheet aluminum has a thickness that is from 0.1 millimeter to 10 millimeters. In some embodiments, the sheet aluminum has a thickness that is from 0.1 millimeter to 1 millimeter. In some embodiments, the sheet aluminum has a thickness that is from 1 millimeter to 3 millimeters. In some embodiments, the sheet aluminum has a thickness that is from 3 millimeters to 5 millimeters. In some embodiments, the sheet aluminum has a thickness that is from 5 millimeters to 10 millimeters. In some embodiments, the sheet aluminum is 1 millimeter in thickness. In some embodiments, the sheet aluminum is 2 millimeters in thickness. In some embodiments, the sheet aluminum has a first thickness (e.g., 0.1 millimeter) in some regions and has one or more regions having a greater second thickness (e.g., 2 millimeters) provided by the addition of a corresponding thickening panel or panels. In some embodiments, the panels 110, 120 are joined to one another around the respective perimeters thereof to form an enclosed structure.

Continuing to refer to Figures 1 and 2, the exterior of the space vehicle 100 includes two or more stacking pillars 140, a solar array mounting interface 150, and one or more antenna modules 160 (e.g., transmitting antenna modules and receiving antenna modules). In some embodiments, the one or more stacking pillars 140 includes two stacking pillars 140. In some embodiments, respective pass-throughs are formed in the panels 110, 120 to allow external elements of the space vehicle 100 to be coupled (e.g., communicatively) to internal elements of the space vehicle 100.

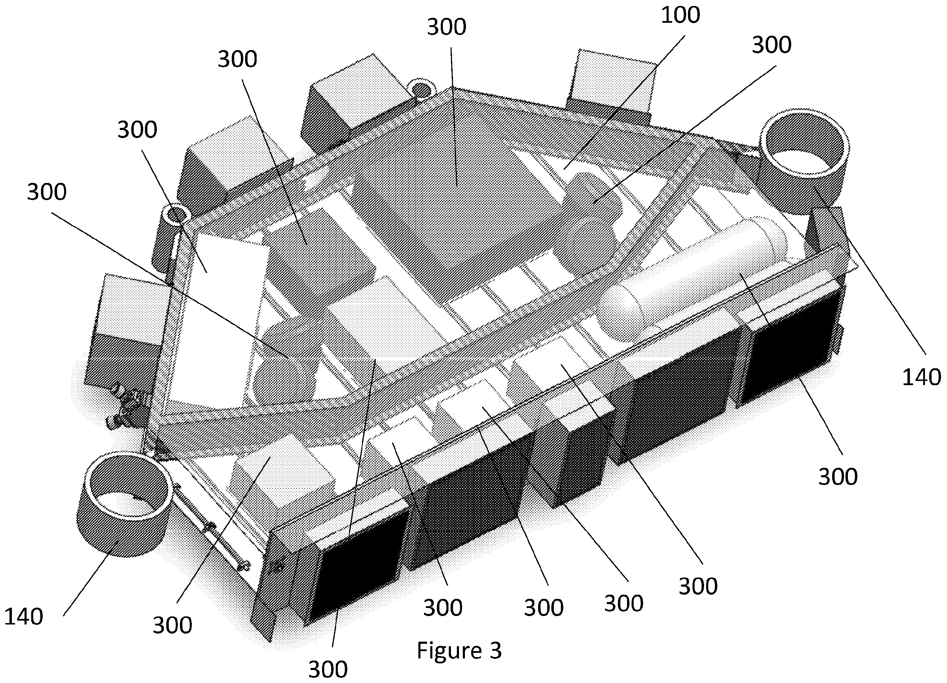

In some embodiments, an exemplary space vehicle 100 includes onboard equipment, such as platform equipment and payloads. Figure 3 shows an exemplary space vehicle 100 with various onboard equipment 300 positioned therein. In some embodiments, onboard equipment 300 includes components such as an on-board computer, a power condition and distribution unit, an on-board processor, an optical terminal (such as an optical head), one or more reaction wheels, a power processing unit, one or more gateway interface units, and/or a battery. However, the specific examples of onboard equipment listed above are only exemplary, and the onboard equipment (e.g., platform equipment and payloads) that will be included in the exemplary space vehicle 100 will vary among different implementations. In some embodiments, at least some elements of the onboard equipment 300 have their respective casings removed (e.g., lack a casing) and are mounted within the exemplary space vehicle by mounting directly to one of the panels. In some embodiments, an exemplary space vehicle can therefore be referred to as a payload-integrated space vehicle.

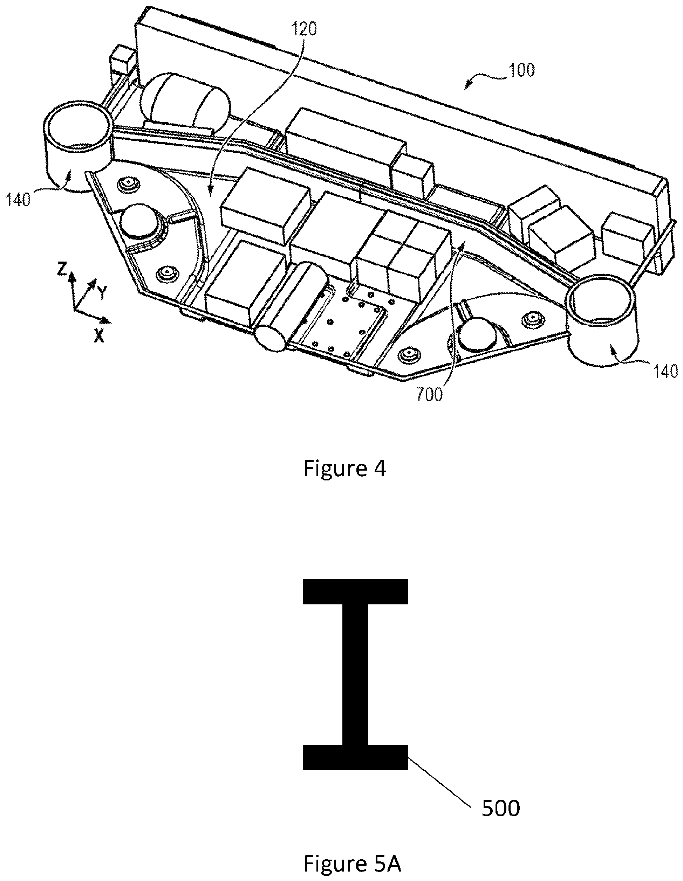

In some embodiments, a stiffener 400 extends along a generally curved path across the interior of an exemplary space vehicle 100. Figure 4 shows a perspective view of the exemplary space vehicle 100, with the panel 110 removed to show interior elements of the space vehicle 100. In some embodiments, the stiffener 400 includes aluminum. In some embodiments, the stiffener 400 includes carbon fiber. In some embodiments, the stiffener 400 includes a carbon fiber reinforced polymer ("CFRP"). In some embodiments, the stiffener 400 includes a combination of more than one of the foregoing materials. In some embodiments, at least one item of the onboard equipment 300 is mounted directly to (e.g., fixed to) the stiffener 400. In some embodiments, the stiffener 400 connects to the panel 110 or the panel 120 proximate to the stacking pillars 140. The stiffener has a first end that is proximate to a first one of the stacking pillars 140 and a second end that is proximate to a second one of the stacking pillars 140. The stiffener 400 connects directly to the stacking pillars 140. In some embodiments, the stiffener 400 is bolted to the panel 110 or to the panel 120. The stiffener 400 provides a rigid mechanical connection between the stacking pillars 140. In some embodiments, the stacking pillars 140 are connected directly to the stiffener 400. In some examples not covered by the claims, the stacking pillars 140 are connected to another structure of the space vehicle 100 and indirectly to the stiffener 400.

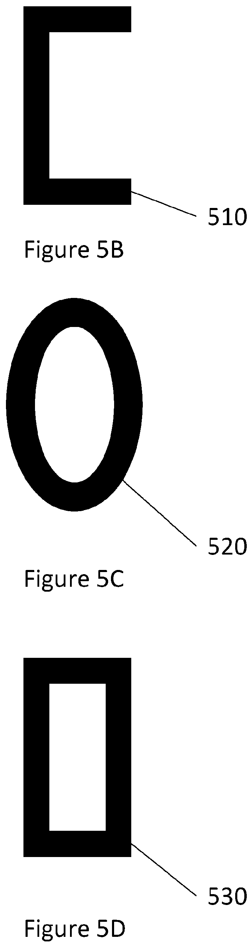

Various embodiments of the exemplary stiffener 400 have differing cross-sectional profiles. In some embodiments, the stiffener 400 has a closed cross-section. In some embodiments, the stiffener 400 has an open cross-section. Figures 5A-5D show exemplary cross-sections of different embodiments of the stiffener 400. In the embodiment shown in Figure 5A, an exemplary stiffener 500 has an I-shaped cross-section. In the embodiment shown in Figure 5B, an exemplary stiffener 510 has a C-shaped cross-section. In the embodiment shown in Figure 5C, an exemplary stiffener 520 has an elliptical cross-section. In the embodiment shown in Figure 5D, an exemplary stiffener 530 has a rectangular cross-section. The specific cross-sections of the exemplary stiffeners 500, 510, 520, and 530 shown in Figures 5A, 5B, 5C, and 5D, respectively, are only exemplary, and other embodiments of the exemplary stiffener may have different cross-sections, including other geometric shapes or more complex shapes, are possible without departing from the broader principles described herein.

In some embodiments, the stiffener 400 has a height that is in a range of from 5 centimeters to 50 centimeters, or that is in a range of from 10 centimeters to 50 centimeters, or that is in a range of from 15 centimeters to 50 centimeters. In some embodiments, the material of the stiffener 400 has a thickness that is in a range of from 1 centimeter to 5 centimeters. In some embodiments, the stiffener 400 has a cross-sectional width that is in a range of from 2 centimeters to 10 centimeters, or is in a range of from 2 centimeters to 8 centimeters, or is in a range of from 2 centimeters to 6 centimeters. In some embodiments, the stiffener 400 has a length that is in a range of from 200 centimeters to 400 centimeters, or is in a range of from 200 centimeters to 350 centimeters, or is in a range of from 200 centimeters to 300 centimeters.

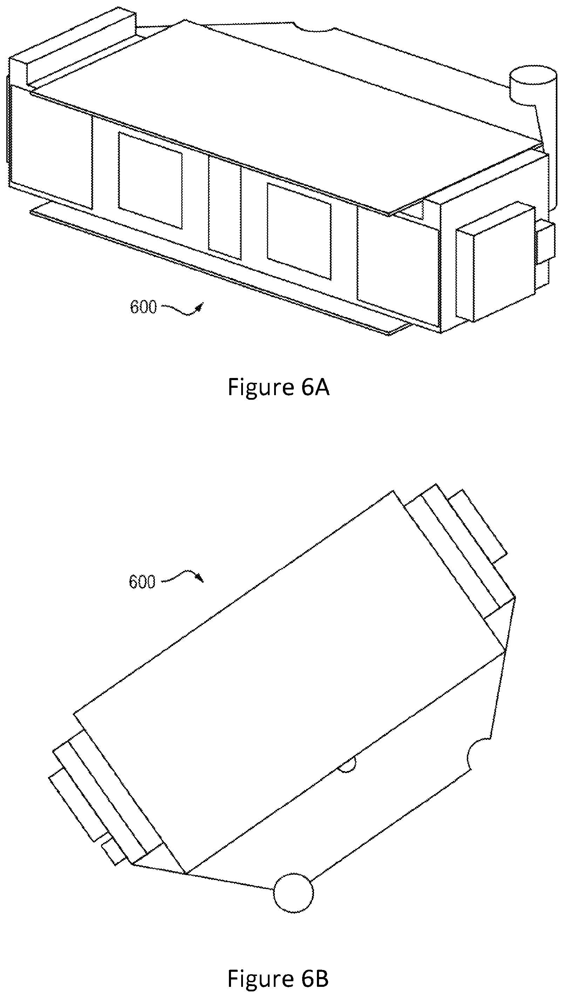

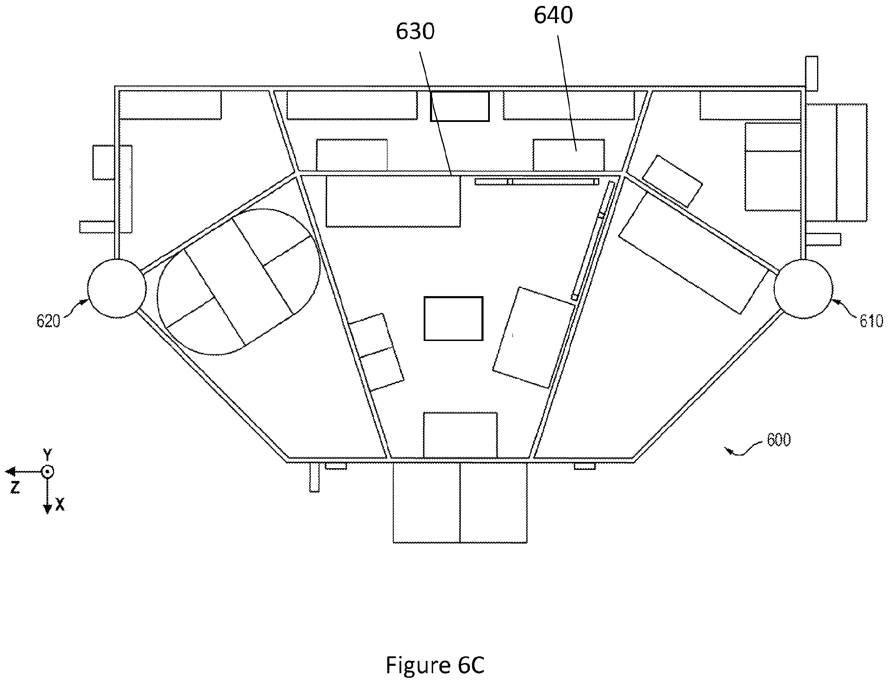

The exemplary embodiments described above with reference to Figures 1-4 relate to a stiffener 400 that is incorporated into a space vehicle having an outer shell comprising press-formed panels. In other embodiments, an exemplary stiffener is incorporated into space vehicles fabricated using other techniques. For example, in some embodiments, an exemplary stiffener is incorporated into a "3D box" satellite. Figure 6A illustrates a perspective view of an exemplary 3D box satellite 600. Figure 6B illustrates a top view of the exemplary 3D box satellite 600. Figure 6C illustrates a section view of the exemplary 3D box satellite 600. In some embodiments, the exemplary 3D box satellite includes stacking pillars 610, 620. In some embodiments, a stiffener 630 extends across the interior of the 3D box satellite 600 so as to connect the stacking pillars 610, 620 to one another. In some embodiments, the stiffener 630 is substantially similar to the stiffener 400 described above. In some embodiments, the 3D box satellite 600 includes various onboard equipment 640 (only one instance of the onboard equipment 640 specifically called out in Figure 6C) similar to the onboard equipment 300 described above with reference to Figure 3.

In some embodiments, an exemplary space vehicle includes an electrical propulsion unit. In some embodiments, the electrical propulsion unit is an ion propulsion unit. In some embodiments, the electrical propulsion unit is a plasma propulsion unit. In some embodiments, the electrical propulsion unit includes fuel.

In some embodiments, an exemplary space vehicle includes at least two stacking pillar. In some embodiments, an exemplary space vehicle includes two stacking pillars. In some embodiments, the stacking pillars are coupled to the exterior of the exemplary space vehicle. The stacking pillars are coupled to the stiffener. In some embodiments, the stacking pillars allow stacking of multiple similar ones of the space vehicle on a launch vehicle without a central support structure.

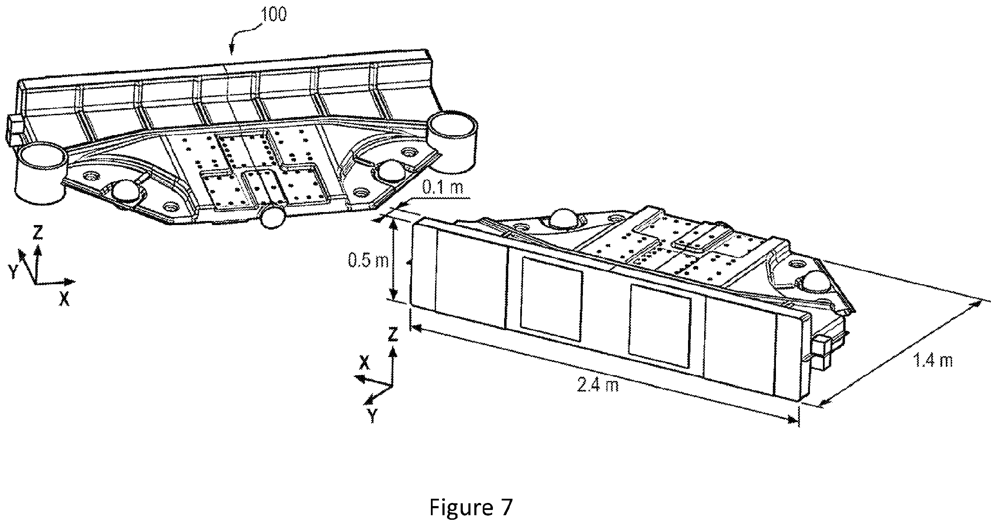

In some embodiments, the exemplary space vehicle 100 is appropriately sized and shaped to allow placement of four of the exemplary space vehicle 100 in a single layer of a launch stack that fits within a circle 4.5 meters in diameter. In some embodiments, such sizing and placement are suitable for use on a launch vehicle or rocket having a fairing that is 5 meters in diameter. In some embodiments, the exemplary space vehicle 100 is appropriately sized and shaped to allow placement of six of the exemplary space vehicle 100 in a single layer of a launch stack that fits within a circle 6.35 meters in diameter. In some embodiments, such sizing and placement are suitable for use on a launch vehicle or rocket having a fairing that is 7 meters in diameter. Figure 7 shows sizing of an exemplary space vehicle 100. It will be apparent to those of skill in the art that the sizing shown in Figure 7 is only exemplary and that a space vehicle manufactured in accordance with the exemplary embodiments disclosed herein may also have any other dimensions. In some embodiments, the space vehicle 100 has a distance between the stacking pillars 140 that is in a range of from 200 centimeters to 300 centimeters. In some embodiments, the space vehicle 100 has a distance between the stacking pillars 140 that is in a range of from 200 centimeters to 280 centimeters. In some embodiments, the space vehicle 100 has a distance between the stacking pillars 140 that is in a range of from 220 centimeters to 260 centimeters.

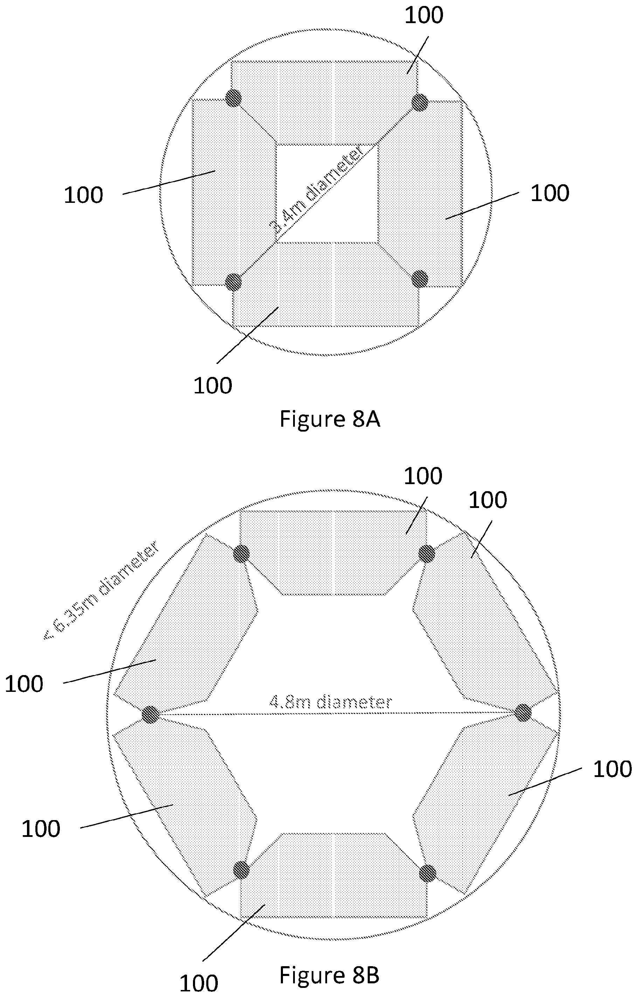

As discussed above, in some embodiments, the stiffener 400 follows a generally curved path across the interior of the space vehicle 100. In some embodiments, the generally curved path of the stiffener 400 is configured in order to impart stability to a launch stack that includes multiple ones of the space vehicle 100 (e.g., four of the space vehicle 100 or six of the space vehicle 100) arranged to form a single layer within a launch stack. Figure 8A shows four of the exemplary space vehicles sized as shown in Figure 7, arranged in a single layer that fits within a circle that is 4.5 meters in diameter. As discussed above, in some embodiments, such a layer is suitable for use on a launch vehicle or rocket having a fairing that is 5 meters in diameter. Figure 8B shows six of the exemplary space vehicles sized as shown in Figure 7, arranged in a single layer that fits within a circle that is 6.35 meters in diameter. As discussed above, in some embodiments, such a layer is suitable for use on a launch vehicle or rocket having a fairing that is 7 meters in diameter. It may be seen from Figures 8A and 8B that the stacking pillars 140 of the space vehicle 100 are appropriately positioned for use in either the layer of four of the space vehicles 100 as shown in Figure 8A or the layer of six of the space vehicles 100 as shown in Figure 8B.

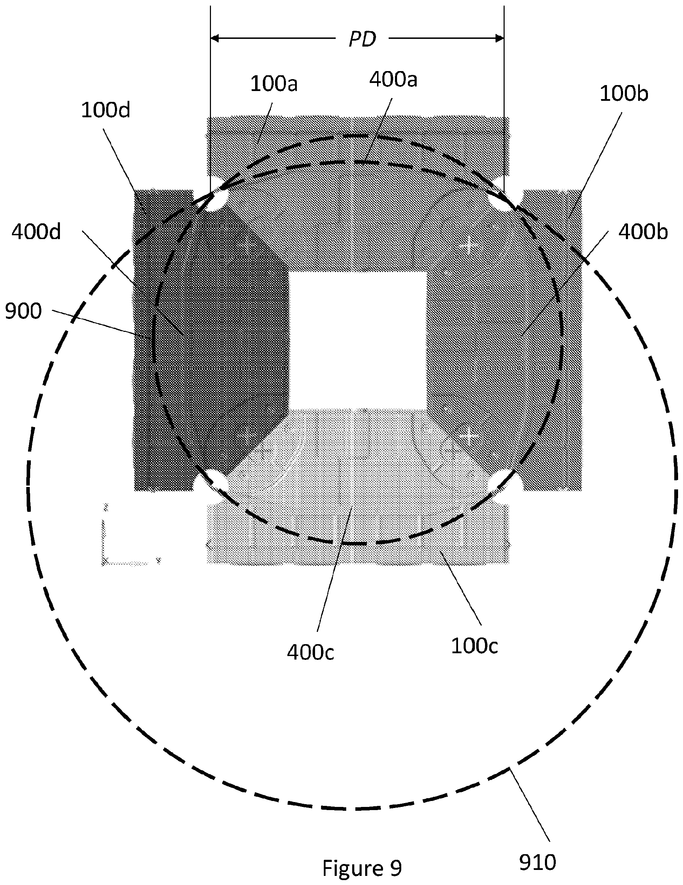

Figure 9 shows a view of four of the space vehicle 100 (identified in Figure 9 as 100a, 100b, 100c, and 100d) positioned adjacent to one another in a single layer of an exemplary launch stack. As shown in Figure 9, the space vehicles 100a, 100b, 100c, and 100d are positioned so as to be joined to one another by respective stacking pillars 140 thereof. Figure 9 also shows the curved paths of the stiffeners 400a, 400b, 400c, and 400d of the respective space vehicles 100a, 100b, 100c, and 100d. As shown in Figure 9, the combined paths of the 400a, 400b, 400c, and 400d form a path resembling a circle 900. In some embodiments, the diameter of the circle 900 is the distance (referred to herein for discussion purposes and shown in Figure 9 as *"PD")* between the stacking pillars 140 of one of the space vehicles 100 times the square root of two; that is, if one of the space vehicles 100 is sized such that *PD* is one (1) meter, then the diameter of the circle 900 is √2 meters (i.e., about 1.414 meters). In some embodiments, the path of the stiffener 400 across the interior of the space vehicle 100 is displaced inward (e.g., with the term "inward" understood with reference to the position of the circle 900 shown in Figure 9) in order for the stiffener 400 to subdivide the interior of the satellite into two portions that are both sufficiently sized to receive onboard equipment therein. As a result of this displacement, in some embodiments, the path of the stiffener 400 follows a path resembling a circle 910 that is larger than the circle 900. In some embodiments, the diameter of the circle 910 is between 1 times and 3 times the diameter of the circle 900. In some embodiments, the diameter of the circle 910 is between 1.5 times and 2.5 times the diameter of the circle 900. Accordingly, in some embodiments, the path of the stiffener 400 generally follows an arc of a circle (e.g., has a generally circular shape) having a diameter that is in a range of from 1 * √2 ** PD* to 3 * √2 ** PD.* In some embodiments, the path of the stiffener 400 generally follows an arc of a circle having a diameter that is in a range of from 1.5 * √2 * *PD* to 2.5 * √2 * *PD.*

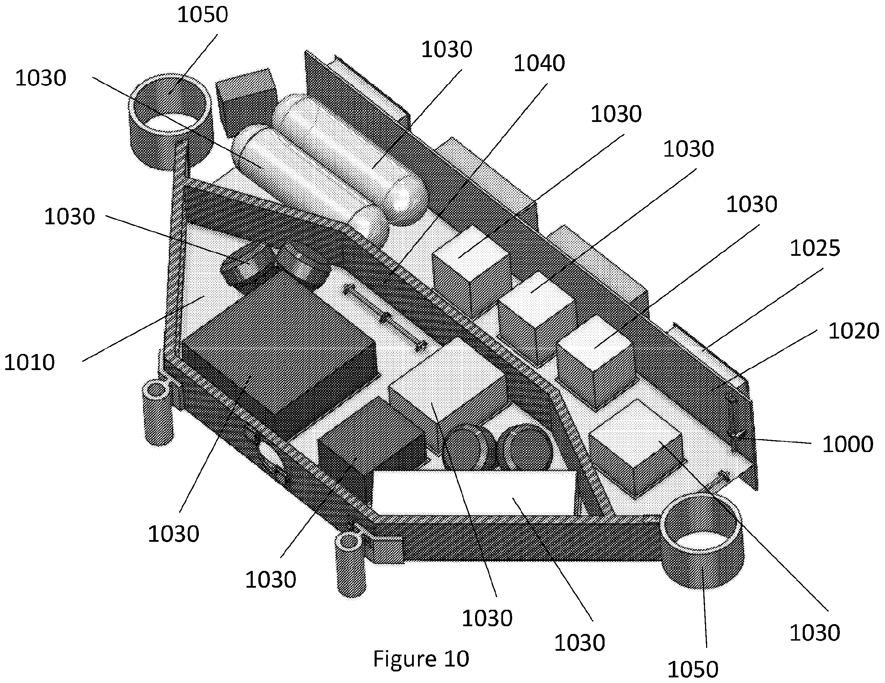

Figure 10 shows an exemplary non-claimed space vehicle 1000 including a stiffener. In Figure 10, the space vehicle 1000 includes a panel 1010 forming a "bottom" of the space vehicle 1000 (as used in describing the space vehicle 1000, the term "bottom" refers to the orientation of the space vehicle 1000 as shown in Figure 10 and not to any particular required orientation of the space vehicle 1000 during any given use case) that is comparable to the panel 120 described above with reference to Figures 1 and 4. In some examples, the space vehicle 1000 also includes an earth panel 1020 that is configured to face toward the Earth when the space vehicle 1000 is in orbit (e.g., includes transmitting and receiving antenna modules 1025). In some examples, the space vehicle 1000 includes a stiffener 1040 that is connected to the panel 1010. In some examples, the stiffener 1040 is substantially similar to the stiffener 400 as described above. In some examples, the space vehicle 1000 includes two or more stacking pillars 1050 which are substantially similar to the stacking pillars 140 described above with reference to Figures 1 and 2. The stiffener 1040 has first and second ends that are connected to the structure of the space vehicle 1000 proximate to respective first and second ones of the stacking pillars 140. The stiffener 1040 has first and second ends that are coupled directly to respective first and second ones of the stacking pillars 140.

In some embodiments, the space vehicle 1000 also includes onboard equipment 1030 that is substantially similar to the onboard equipment 300 described above with reference to Figure 3. In some embodiments, at least some of the onboard equipment 1030 is mounted to the panel 1010. In some embodiments, at least some of the onboard equipment is mounted to the earth panel 1020. In some embodiments, at least some of the onboard equipment 1030 is mounted to the stiffener 400. In Figure 10, the space vehicle 1000 lacks a further structural panel that is comparable to the panel 110 described above with reference to Figures 1 and 4. The space vehicle 1000 shown in Figure 10, due to the lack of a further structural panel, at least some of the onboard equipment 1030 is exposed to the surroundings of the space vehicle 1000 (e.g., is exposed to space). The space vehicle 1000 shown in Figure 10, at least some of the onboard equipment is separated from the surroundings of the space vehicle 1000 (e.g., is protected from exposure to space) by a non-structural element, such as a multi-layer insulator (e.g., including multiple reflective layers such as metalized polymer films).

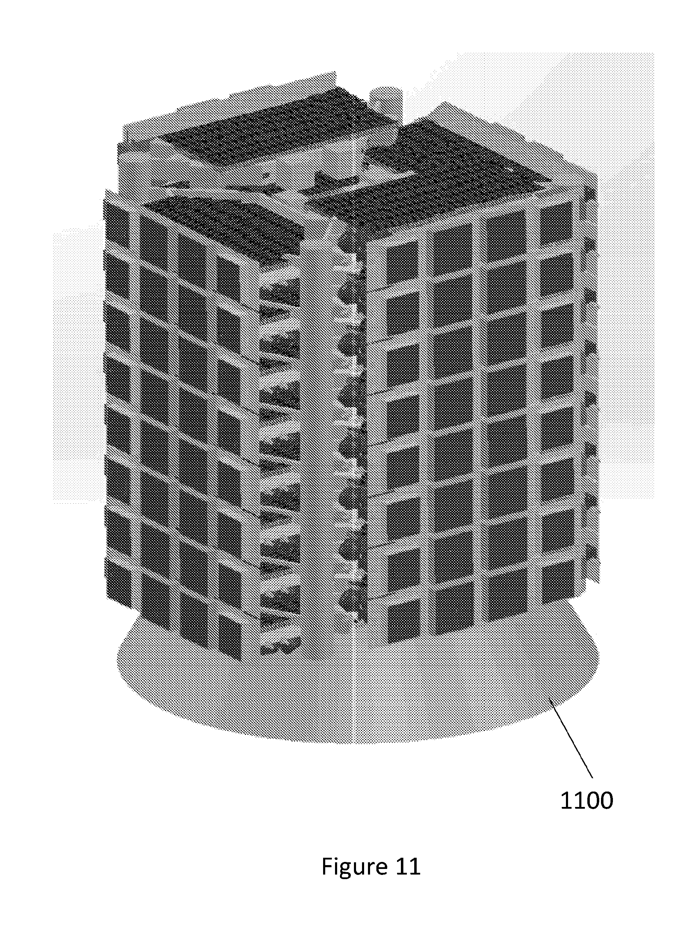

As discussed above, in some embodiments, inclusion of a stiffener 400 having a curved path improves structural stability of a launch stack including multiple ones of the space vehicle 100 (e.g., a launch stack including multiple layers each of which resembles the arrangements shown in Figures 8A and 8B). Figure 11 shows an exemplary launch stack 1100 having layers that each include four of the space vehicle 100, as shown in Figure 8A. For example, in some embodiments, a stiffener 400 having a path as described above improves the lateral frequency of a stack comprised of a plurality of the space vehicle 100, such as the exemplary launch stack 1100 shown in Figure 10, by a factor of at least two as compared to the lateral frequency of a comparable stack comprised of comparable space vehicles, but in which the stiffener 400 is omitted from the comparable space vehicles.

The exemplary embodiments described herein relate to space vehicles having internal stiffeners. The exemplary internal stiffeners impart structural stability to the exemplary space vehicles in a manner that is less expensive and more easily manufactural than honeycomb panels. In particular, the internal stiffeners extend between and connect stacking pillars of such space vehicles. Additionally, by connecting stacking pillars to one another, multiple ones of the exemplary space vehicles that are coupled to one another in a launch stack by way of their respective stacking pillars will act as a single connected structure, thereby imparting additional structural stability to such a launch stack such that the launch stack will exhibit greater structural stiffness than that of its individual parts.

While a number of embodiments of the present invention have been described, it is understood that these embodiments are illustrative only, and not restrictive, and that many modifications may become apparent to those of ordinary skill in the art provided they fall under the scope of the claims. For example, all dimensions discussed herein are provided as examples only, and are intended to be illustrative and not restrictive, the scope of the invention being defined by the claims.

## Claims

1. A space vehicle (100, 1000), comprising:
a space vehicle body having an interior, an exterior, a first side and a second side opposite the first side;
a first stacking pillar (140, 1050, 610) positioned on the exterior of the space vehicle body at the first side of the space vehicle body; and
a second stacking pillar (140, 1050, 620) positioned on the exterior of the space vehicle body at the second side of the space vehicle body; **characterised in that** the space vehicle comprises
a stiffener (400, 630) extending through the interior of the space vehicle body from a first end proximate to the first stacking pillar to a second end proximate to the second stacking pillar so as to rigidly connect the first stacking pillar to the second stacking pillar, the stiffener being directly coupled to the first stacking pillar and the second stacking pillar,
wherein the stiffener is configured such that, when a plurality of the space vehicle are positioned adjacent to one another so as to form a layer of a launch stack (1100) and joined to one another at respective stacking pillars thereof, the stiffeners of the plurality of the space vehicle combine to form a generally circular shape.

2. The space vehicle of claim 1, wherein the stiffener comprises at least one of aluminum, carbon fiber, or a carbon fiber reinforced polymer.

3. The space vehicle of claim 1, wherein the stiffener comprises an I-shaped cross-section, a C-shaped cross-section, an elliptical cross-section, or a rectangular cross-section.

4. The space vehicle of claim 1, wherein the generally circular shape has a diameter that is in a range of from (a) a distance between the first stacking pillar and the second stacking pillar multiplied by the square root of two to (b) three multiplied by the distance between the first stacking pillar and the stacking pillar multiplied by the square root of two.

5. The space vehicle of claim 4, wherein the generally circular shape has a diameter that is in a range of from (a) 1.5 multiplied by the distance between the first stacking pillar and the second stacking pillar multiplied by the square root of two to (b) 2.5 multiplied by the distance between the first stacking pillar and the stacking pillar multiplied by the square root of two.

6. The space vehicle of claim 1, wherein a distance between the first stacking pillar and the second stacking pillar is in a range of from 200 centimeters to 300 centimeters.

7. The space vehicle of claim 1, wherein the stiffener is bolted to the space vehicle body.

8. The space vehicle of claim 1, further comprising an onboard equipment component.

9. The space vehicle of claim 8, wherein the onboard equipment component (300, 640, 1030) is fixed to the stiffener.

10. The space vehicle of claim 8, wherein the onboard equipment component has its casing removed.

11. A system, comprising:
a plurality of space vehicles (100, 1000) of claim 1,
wherein the plurality of space vehicles are positioned adjacent to one another and joined to one another at respective stacking pillars thereof so as to form a layer of a launch stack (1100), and
wherein the stiffeners of the plurality of the space vehicle combine to form a generally circular shape.

12. The system of claim 11, wherein the plurality of space vehicles comprises four space vehicles.

13. The system of claim 11, wherein the plurality of space vehicles comprises six space vehicles.

## Patentansprüche

1. Raumfahrzeug (100, 1000), umfassend:
einen Raumfahrzeugkörper mit einem Innenraum, einer Außenseite, einer ersten Seite und einer der ersten Seite gegenüberliegenden zweiten Seite;
eine erste Stapelsäule (140, 1050, 610), die an der Außenseite des Raumfahrzeugkörpers an der ersten Seite des Raumfahrzeugkörpers angeordnet ist; und
eine zweite Stapelsäule (140, 1050, 620), die an der Außenseite des Raumfahrzeugkörpers auf Höhe der zweiten Seite des Raumfahrzeugkörpers angeordnet ist; **dadurch gekennzeichnet, dass** das Raumfahrzeug umfasst:
eine Versteifung (400, 630), die sich durch den Innenraum des Raumfahrzeugkörpers von einem ersten Ende in der Nähe der ersten Stapelsäule bis zu einem zweiten Ende in der Nähe der zweiten Stapelsäule erstreckt, um die erste Stapelsäule starr mit der zweiten Stapelsäule zu verbinden, wobei die Versteifung direkt mit der ersten Stapelsäule und der zweiten Stapelsäule verbunden ist,
wobei die Versteifung so gestaltet ist, dass, wenn eine Vielzahl von Raumfahrzeugen nebeneinander angeordnet ist, um eine Schicht eines Startstapels (1100) zu bilden, und an ihren jeweiligen Stapelsäulen miteinander verbunden ist, sich die Versteifungen der Vielzahl von Raumfahrzeugen zu einer im Wesentlichen kreisförmigen Form verbinden.

2. Raumfahrzeug nach Anspruch 1, bei dem die Versteifung mindestens eines der folgenden Materialien umfasst: Aluminium, Kohlenstofffaser oder ein kohlenstofffaserverstärktes Polymer.

3. Raumfahrzeug nach Anspruch 1, bei dem die Versteifung einen I-förmigen Querschnitt, einen C-förmigen Querschnitt, einen elliptischen Querschnitt oder einen rechteckigen Querschnitt aufweist.

4. Raumfahrzeug nach Anspruch 1, bei dem die im Wesentlichen kreisförmige Form einen Durchmesser aufweist, der in einem Bereich liegt, der von (a) einem Abstand zwischen der ersten Stapelsäule und der zweiten Stapelsäule, multipliziert mit der Quadratwurzel aus zwei, bis zu (b) drei, multipliziert mit dem Abstand zwischen der ersten Stapelsäule und der zweiten Stapelsäule, multipliziert mit der Quadratwurzel aus zwei, reicht.

5. Raumfahrzeug nach Anspruch 4, bei dem die im Wesentlichen kreisförmige Form einen Durchmesser aufweist, der in einem Bereich liegt von (a) 1,5 multipliziert mit dem Abstand zwischen der ersten Stapelsäule und der zweiten Stapelsäule multipliziert mit der Quadratwurzel aus zwei bis (b) 2,5 multipliziert mit dem Abstand zwischen der ersten Stapelsäule und der zweiten Stapelsäule multipliziert mit der Quadratwurzel aus zwei.

6. Raumfahrzeug nach Anspruch 1, bei dem ein Abstand zwischen der ersten Stapelsäule und der zweiten Stapelsäule in einem Bereich von 200 Zentimetern bis 300 Zentimetern liegt.

7. Raumfahrzeug nach Anspruch 1, bei dem die Versteifung mit dem Raumfahrzeugkörper verschraubt ist.

8. Raumfahrzeug nach Anspruch 1, das ferner eine Bordausrüstungskomponente umfasst.

9. Raumfahrzeug nach Anspruch 8, bei dem die Bordausrüstungskomponente (300, 640, 1030) an der Versteifung befestigt ist.

10. Raumfahrzeug nach Anspruch 8, bei dem an der Bordausrüstungskomponente das Gehäuse entfernt ist.

11. System, umfassend:
eine Vielzahl von Raumfahrzeugen (100, 1000) nach Anspruch 1,
in dem die Vielzahl von Raumfahrzeugen nebeneinander positioniert und an ihren jeweiligen Stapelsäulen miteinander verbunden sind, um eine Schicht eines Startstapels (1100) zu bilden, und
in dem sich die Versteifungen der Vielzahl von Raumfahrzeugen zu einer im Wesentlichen kreisförmigen Form verbinden.

12. System nach Anspruch 11, in dem die Vielzahl von Raumfahrzeugen vier Raumfahrzeuge umfasst.

13. System nach Anspruch 11, in dem die Vielzahl von Raumfahrzeugen sechs Raumfahrzeuge umfasst.

## Revendications

1. Véhicule spatial (100, 1000), comprenant :
un corps de véhicule spatial comportant un intérieur, un extérieur, un premier côté et un deuxième côté opposé au premier côté ;
un premier pilier d'empilement (140, 1050, 610) positionné sur l'extérieur du corps de véhicule spatial, au niveau du premier côté du corps de véhicule spatial ; et
un deuxième pilier d'empilement (140, 1050, 620) positionné sur l'extérieur du corps de véhicule spatial, au niveau du deuxième côté du corps de véhicule spatial ; **caractérisé en ce que** le véhicule spatial comprend
un raidisseur (400, 630) s'étendant à travers l'intérieur du corps de véhicule spatial depuis une première extrémité proche du premier pilier d'empilement jusqu'à une deuxième extrémité proche du deuxième pilier d'empilement de manière à relier rigidement le premier pilier d'empilement au deuxième pilier d'empilement, le raidisseur étant directement couplé au premier pilier d'empilement et au deuxième pilier d'empilement,
dans lequel le raidisseur est configuré de telle sorte que, lorsqu'une pluralité de véhicules spatiaux sont positionnés adjacents les uns aux autres de manière à former une couche d'une pile de lancement (1100) et joints les uns aux autres au niveau de leurs piliers d'empilement respectifs, les raidisseurs de la pluralité de véhicules spatiaux se combinent pour former une forme générale circulaire.

2. Véhicule spatial selon la revendication 1, dans lequel le raidisseur comprend au moins l'un parmi l'aluminium, la fibre de carbone ou un polymère renforcé de fibres de carbone.

3. Véhicule spatial selon la revendication 1, dans lequel le raidisseur présente une section droite en forme de **I,** une section droite en forme de C, une section droite elliptique ou une section droite rectangulaire.

4. Véhicule spatial selon la revendication 1, dans lequel la forme générale circulaire a un diamètre compris dans une plage allant de (a) une distance entre le premier pilier d'empilement et le deuxième pilier d'empilement multipliée par la racine carrée de deux à (b) trois multiplié par la distance entre le premier pilier d'empilement et le deuxième pilier d'empilement multipliée par la racine carrée de deux.

5. Véhicule spatial selon la revendication 4, dans lequel la forme générale circulaire a un diamètre qui est dans une plage allant de (a) 1,5 multiplié par la distance entre le premier pilier d'empilement et le deuxième pilier d'empilement multipliée par la racine carrée de deux à (b) 2,5 multiplié par la distance entre le premier pilier d'empilement et le deuxième pilier d'empilement multipliée par la racine carrée de deux.

6. Véhicule spatial selon la revendication 1, dans lequel une distance entre le premier pilier d'empilement et le deuxième pilier d'empilement est dans une plage allant de 200 centimètres à 300 centimètres.

7. Véhicule spatial selon la revendication 1, dans lequel le raidisseur est boulonné au corps de véhicule spatial.

8. Véhicule spatial selon la revendication 1, comprenant en outre un composant d'équipement embarqué.

9. Véhicule spatial selon la revendication 8, dans lequel le composant d'équipement embarqué (300, 640, 1030) est fixé au raidisseur.

10. Véhicule spatial selon la revendication 8, dans lequel le composant d'équipement embarqué voit son boîtier retiré.

11. Système, comprenant :
une pluralité de véhicules spatiaux (100, 1000) de la revendication 1.
dans lequel les véhicules spatiaux de la pluralité sont positionnés adjacents les uns aux autres et joints les uns aux autres au niveau de leurs piliers d'empilement respectifs de manière à former une couche d'une pile de lancement (1100), et
dans lequel les raidisseurs de la pluralité de véhicules spatiaux se combinent pour former une forme générale circulaire.

12. Système selon la revendication 11, dans lequel la pluralité de véhicules spatiaux comprend quatre véhicules spatiaux.

13. Système selon la revendication 11, dans lequel la pluralité de véhicules spatiaux comprend six véhicules spatiaux.
